# EUROPÄISCHE PATENTSCHRIFT

(11) **EP 3 958 434 B1**
(45) Veröffentlichungstag und Bekanntmachung des Hinweises auf die Patenterteilung: **23.04.2025**
(21) Anmeldenummer: 21187425.0
(22) Anmeldetag: 23.07.2021
(51) Int. Cl.: H02J 50/12, H02J 50/80

(54) **VERFAHREN ZUM BETREIBEN EINER VORRICHTUNG ZUM DRAHTLOSEN ÜBERTRAGEN VON ENERGIE IN RICHTUNG EINES ELEKTRISCHEN VERBRAUCHERS MITTELS INDUKTIVER KOPPLUNG, VORRICHTUNG UND SYSTEM**
METHOD FOR OPERATING A DEVICE FOR WIRELESS TRANSMISSION OF ENERGY IN THE DIRECTION OF AN ELECTRICAL CONSUMER BY MEANS OF INDUCTIVE COUPLING, DEVICE AND SYSTEM
PROCÉDÉ DE FONCTIONNEMENT D'UN DISPOSITIF DE TRANSMISSION SANS FIL D'ÉNERGIE VERS UN CONSOMMATEUR ÉLECTRIQUE AU MOYEN D'UN COUPLAGE INDUCTIF, DISPOSITIF ET SYSTÈME

(30) Priorität: 20.08.2020 DE 102020210562
(43) Veröffentlichungstag der Anmeldung: 23.02.2022
(73) Patentinhaber: E.G.O. Elektro-Gerätebau GmbH, 75038 Oberderdingen (DE)
(72) Erfinder: Egenter, Christian, 75015 Bretten (DE); Göbel, Robin, 76698 Ubstadt-Weiher (DE); Herweg, Elmar, 75038 Oberderdingen (DE); Müller, Max-Felix, 75038 Oberderdingen (DE); Wächter, Ulrich, 76646 Bruchsal (DE)
(74) Vertreter: Patentanwälte Ruff, Wilhelm, Beier, Dauster & Partner mbB

(56) Entgegenhaltungen:
- US-A1- 2012 112 554
- US-A1- 2014 333 145
- US-A1- 2016 181 818
- US-A1- 2017 149 286

## Beschreibung

Die Erfindung betrifft ein Verfahren zum Betreiben einer Vorrichtung zum drahtlosen Übertragen von Energie in Richtung eines elektrischen Verbrauchers mittels induktiver Kopplung, eine Vorrichtung und ein System.

Die US 2016/0181818 A1 und die US 2017/0149286 A1 offenbaren jeweils eine Vorrichtung zum drahtlosen Übertragen von Energie in Richtung eines elektrischen Verbrauchers mittels induktiver Kopplung. Die Vorrichtung weist einen Wechselrichter auf, der aus einer Speisespannung versorgt ist. Die Vorrichtung weist weiter Kondensatoren und eine Leistungsspule auf, wobei die Kondensatoren und die Leistungsspule derart verschaltet sind, dass sie einen Schwingkreis bilden. Der Wechselrichter ist dazu ausgebildet, aus der Speisespannung ein Ansteuersignal für die Leistungsspule zu erzeugen. Die Vorrichtung weist weiter eine von der Leistungsspule getrennt ausgebildete Kommunikationsspule auf, die dazu ausgebildet ist, Daten bidirektional mit dem elektrischen Verbraucher auszutauschen. Während eines Datenaustausches über die Kommunikationsspule wird die Leistungsspule derart angesteuert, dass trotz des mittels der Leistungsspule erzeugten magnetischen Wechselfelds ein Datenaustausch über die Kommunikationsspule möglich ist.

Die US 2014/0333145 A1 offenbart ein Verfahren zur Lasterkennung in einem elektrischen Verbraucher, der drahtlos mittels Energie versorgt wird.

Die US 2012/0112554 A1 offenbart ein Verfahren zum drahtlosen Übertragen von Energie in Richtung eines elektrischen Verbrauchers mittels induktiver Kopplung und ein zugehöriges Verfahren zum Steuern einer übertragenen Leistung.

Der Erfindung liegt die Aufgabe zugrunde, ein Verfahren zum Betreiben einer Vorrichtung zum drahtlosen Übertragen von Energie in Richtung eines elektrischen Verbrauchers mittels induktiver Kopplung, eine Vorrichtung und ein System zur Verfügung zu stellen, die einen möglichst zuverlässigen und flexiblen Betrieb ermöglichen.

Die Vorrichtung dient zum drahtlosen Übertragen von Energie in Richtung eines elektrischen Verbrauchers mittels induktiver Kopplung.

Die Vorrichtung weist ein Kleinspannungsnetzteil auf, wobei das Kleinspannungsnetzteil zur Erzeugung einer Speisespannung mit einem ersten Pegel dient.

Die Vorrichtung weist einen Gleichrichter zur Erzeugung der Speisespannung mit einem zweiten Pegel auf, wobei das Kleinspannungsnetzteil über eine Entkopplungsdiode mit einem Ausgang des Gleichrichters verbunden ist und wobei der erste Pegel kleiner als der zweite Pegel ist,

Die Vorrichtung weist einen Wechselrichter oder einen Umrichter auf, der aus der Speisespannung versorgt ist. Die Speisespannung ist bevorzugt eine Gleichspannung. Der Wechselrichter kann beispielsweise einen herkömmlich verschalteten Wechselrichterzweig mit zwei Halbleiterschaltmitteln aufweisen. Alternativ kann die Vorrichtung auch zwei Wechselrichterzweige als Vollbrückenschalung aufweisen. Insoweit sei auch auf die einschlägige Fachliteratur verwiesen.

Die Vorrichtung weist weiter mindestens einen Kondensator und eine Leistungsspule auf, wobei der mindestens eine Kondensator und die Leistungsspule derart verschaltet sind, dass sie einen Parallel- oder Serienschwingkreis bilden.

Der Wechselrichter ist dazu ausgebildet, aus der Speisespannung eine, insbesondere pulsweitenmodulierte, Anregungsspannung für den Schwingkreis zu erzeugen. Die pulsweitenmodulierte Anregungsspannung ist typisch eine Rechteckspannung mit einem konstanten oder veränderlichen Tastgrad bzw. Tastverhältnis und einer konstanten oder veränderlichen Periodendauer bzw. Frequenz. Insoweit sei auch auf die einschlägige Fachliteratur verwiesen.

Der Wechselrichter weist weiter eine von der Leistungsspule getrennt ausgebildete Kommunikationsspule auf, die dazu ausgebildet ist, Daten bidirektional mit dem elektrischen Verbraucher auszutauschen.

Der Wechselrichter weist weiter eine Steuereinheit auf, die dazu ausgebildet ist, den Wechselrichter derart anzusteuern, dass der Wechselrichter während des Datenaustausches über die Kommunikationsspule aus der Speisespannung mit dem ersten Pegel gespeist wird, und der Wechselrichter außerhalb des Datenaustausches über die Kommunikationsspule aus der Speisespannung mit dem zweiten Pegel gespeist wird.

Das Verfahren dient zum Betreiben einer oben beschriebenen Vorrichtung zum drahtlosen Übertragen von Energie in Richtung eines elektrischen Verbrauchers mittels induktiver Kopplung, auch als Wireless Power Transfer, WPT, bezeichnet. Hinsichtlich der Grundlagen zu WPT sei auch auf die einschlägige Fachliteratur verwiesen. Bevorzugt wird die Vorrichtung gemäß dem WPC (Wireless Power Consortium) Ki (Cordless Kitchen) Verfahren betrieben.

Die Vorrichtung zum drahtlosen Übertragen von Energie in Richtung eines elektrischen Verbrauchers mittels induktiver Kopplung kann auch als Transmitter bezeichnet werden und der elektrische Verbraucher kann als Receiver bezeichnet werden.

Erfindungsgemäß wird während eines Datenaustausches bzw. einer Datenübertragung über die Kommunikationsspule die Leistungsspule derart angesteuert, dass trotz des mittels der Leistungsspule erzeugten magnetischen Wechselfelds ein Datenaustausch über die Kommunikationsspule noch möglich ist.

In einer Ausführungsform wird während des Datenaustausches über die Kommunikationsspule die Leistungsspule derart angesteuert, dass ein Betrag einer aufgrund des magnetischen Wechselfelds in der Kommunikationsspule induzierten Spannung kleiner als ein vorgegebener Schwellenwert, beispielsweise kleiner als 2 V, bleibt.

In einer Ausführungsform ist der erste Pegel kleiner als 60 V, insbesondere kleiner gleich 24 V. Vorzugsweise wird zur Erzeugung des ersten Pegels ein Kleinspannungsnetzteil bzw. eine Quelle verwendet, das/die zur Ansteuerung von IGBT-Treibern des Wechselrichters oder zur Ansteuerung eines Lüfters in der Vorrichtung bereits vorhanden ist.

In einer Ausführungsform entspricht der zweite Pegel einer gleichgerichteten Netzwechselspannung.

In einer Ausführungsform wird der Datenaustausch zyklisch durchgeführt.

In einer Ausführungsform wird während des Datenaustausches ein Wert eines elektrischen Parameters eines die Leistungsspule aufweisenden Schwingkreises ermittelt.

In einer Ausführungsform wird während des Datenaustausches der Wert des elektrischen Parameters in Form eines Werts der Impedanz der Leistungsspule und/oder eines Werts der Impedanz des die Leistungsspule aufweisenden Schwingkreises ermittelt, und/oder während des Datenaustausches wird der Wert des elektrischen Parameters in Form einer Leistung ermittelt, die in die Leistungsspule und/oder in den die Leistungsspule aufweisenden Schwingkreis eingespeist wird.

In einer Ausführungsform wird der Wert des elektrischen Parameters für eine Vielzahl von unterschiedlichen Frequenzen ermittelt, um einen Frequenzgang des Parameterwerts zu bestimmen.

In einer Ausführungsform wird basierend auf den für die Vielzahl von unterschiedlichen Frequenzen ermittelten Parameterwerten eine Arbeitsfrequenz ermittelt, mit der die Leistungsspule, insbesondere außerhalb des Datenaustausches, angesteuert wird.

In einer Ausführungsform wird basierend auf den für die Vielzahl von unterschiedlichen Frequenzen ermittelten Parameterwerten eine maximal übertragbare Leistung ermittelt, wobei die ermittelte maximal übertragbare Leistung mittels der Kommunikationsspule an den elektrischen Verbraucher kommuniziert wird.

In einer Ausführungsform wird eine Differenz zwischen zwei bei unterschiedlichen Frequenzen ermittelten Parameterwerten gebildet, wobei die gebildete Differenz mittels der Kommunikationsspule an den elektrischen Verbraucher kommuniziert wird.

In einer Ausführungsform werden basierend auf den für die Vielzahl von unterschiedlichen Frequenzen ermittelten Parameterwerten unerwünschte metallische Fremdkörper detektiert.

In einer Ausführungsform wird während des Datenaustausches eine Eigenresonanzfrequenz eines die Leistungsspule aufweisenden Schwingkreises ermittelt.

In einer Ausführungsform werden basierend auf der ermittelten Eigenresonanzfrequenz unerwünschte metallische Fremdkörper detektiert.

In einer Ausführungsform werden gegebenenfalls detektierte metallische Fremdkörper mittels der Kommunikationsspule an den elektrischen Verbraucher kommuniziert.

Das System weist eine oben beschriebene Vorrichtung und einen elektrischen Verbraucher auf.

Wireless Power Transfer (WPT) soll für kabellose Geräte bzw. elektrische Verbraucher eine Energieversorgung bereitstellen, die vergleichbar flexibel wie eine Steckdose genutzt werden kann. Die erfindungsgemäße Vorrichtung zum drahtlosen Übertragen von Energie in Richtung eines elektrischen Verbrauchers wird auch als Transmitter bezeichnet und der elektrische Verbraucher als Receiver.

Die Energieübertragung bei WPT erfolgt über magnetische Kopplung zwischen einer Leistungsspule im Transmitter und einer korrespondierenden Leistungsspule im Receiver, die beide vorzugsweise mittels Kondensatoren auf eine gleiche oder zumindest ähnliche Resonanzfrequenz abgestimmt sind. Es ergibt sich somit eine frequenzabhängige Übertragungsfunktion des Receivers zum Transmitter. Die Übertragungsfunktion kann beispielsweise als die im Receiver abgenommene Leistung P_Last(f), die übertragene Spannung U_Last(f) bzw. Strom I_Last(f) im Receiver oder die Gesamtimpedanz Z_tot(f) jeweils abhängig von der Arbeitsfrequenz f des Transmitters dargestellt werden.

Ein Transmitter kann beispielsweise in einem Induktionskochfeld integriert sein oder als versteckte Versorgungseinheit unter eine Küchenarbeitsplatte bzw. einer Tischplatte untergebaut werden. Auch portable Transmitter zur flexiblen Nutzung von kabellosen Receivern sind möglich.

Der Receiver ist typisch in einem kabellosen Gerät, insbesondere einem Küchengerät, integriert, wobei die Geräte unterschiedlichste Funktionen wie beispielsweise Heizen, Rühren, Mixen, Zerkleinern bzw. Kombinationen von Funktionen beinhalten können, wobei Leistungsbedarf und Durchmesser der Geräte sehr stark variieren können, beispielsweise von 50 bis 2400 Watt oder Leistungsspulendurchmessern im Receiver von beispielsweise 8 bis 23 cm, was zu stark unterschiedlichen Übertragungsfunktionen und Arbeitspunkten des Wechselrichters im Transmitter führt.

Die Bedienung erfolgt vorzugsweise am Receiver, wozu dieser mit einer Hilfsenergie vom Transmitter versorgt werden muss, wenn gleichzeitig eine Batterie im Receiver vermieden werden soll. Auch wird ein Datenaustausch zwischen Receiver und Transmitter benötigt, damit Einstellungen, usw. ausgetauscht werden können.

Vorzugsweise werden zur Kommunikation Antennen in Form von Kommunikationsspulen mit kurzer Reichweite eingesetzt, da so eine eindeutige Zuordnung vom Receiver zum Transmitter gegeben ist und keine Verwechslung mit einem benachbarten Sender möglich ist, wie dies beispielsweise bei einer BLE-Kommunikation der Fall wäre. Bei einer geeigneten Nahfeldkommunikation sind die Kommunikationsspulen mit den Leistungsspulen wirkverbunden, sie liegen beispielsweise zwischen den Leistungsspulen, weshalb über diese Kommunikationsspulen auch die Übertragung einer kleinen Hilfsenergie zum Aktivieren einer zumindest einfachen Bedienung und Anzeige möglich ist und so ein batterieloser Betrieb ermöglicht wird. Ein Nachteil dieser Anordnung ist jedoch, dass sich Leistungsspulen und Kommunikationsspulen gegenseitig beeinflussen, weshalb normalerweise nur entweder die Kommunikation oder die Leistungsversorgung zur gleichen Zeit aktiv sein darf.

Die von einem Transmitter an einen Receiver übertragbare Leistung wird unter anderem durch die magnetische Kopplung von der Leistungsspule des Transmitters zur Leistungsspule des Receivers begrenzt, da bei gegebener Dimensionierung eines Wechselrichters der Strom im Transmitter erhöht werden muss, wenn die Kopplung schlechter wird. D.h. abhängig von der Kopplung sowie der maximalen Strombelastbarkeit des Transmitter-Wechselrichters ergibt sich eine maximal übertragbare Leistung, die aber auch von Designparametern des Receivers abhängig ist.

Bei schlechter Kopplung nimmt auch das Magnetfeld im Bereich um Transmitter und Receiver herum zu. Daher wäre es wünschenswert, wenn die Kopplung im Betrieb vom Transmitter gemessen werden kann, um so in Kombination mit vom Receiver kommunizierten Designparametern auf die ausreichende Überdeckung des Receivers über dem Transmitter schließen zu können und/oder die Übertragungsfunktion berechnen zu können, aus der geeignete Betriebsparameter für eine effiziente Energieübertragung bzw. ungeeignete Arbeitspunkte oder Regelparameter (Verstärkung der Strecke) abgeleitet werden können.

Alternativ bzw. ergänzend zum Ermitteln der gesamten Übertragungsfunktion können auch ein oder mehrere, zum aktuellen Arbeitspunkt benachbarte Arbeitspunkte gemessen werden, um so auf die partielle Steilheit am Arbeitspunkt schließen zu können und entsprechend beispielsweise eine Regler-Schrittweite anpassen zu können. Aus mehreren Messpunkten lassen sich mehrere Ersatzparameter berechnen. Beispielsweise können so auch Ersatzparameter des Receivers vom Transmitter unabhängig von kommunizierten Daten des Receivers selbst berechnet werden, um so Steuerungsparameter des Gesamtsystems bestimmen zu können.

Darüber hinaus kann auf die Verwendung von zusätzlichen Einrichtungen zur Erkennung von unerlaubten Gegenständen (Foreign Objects) verzichtet werden, falls diese mittels einer Impedanzmessung mit der Leistungsspule des Transmitters erkannt werden können. Bei WPT muss vor und gegebenenfalls während der Leistungsübertragung an den Receiver geprüft werden, ob sich unerlaubte Gegenstände über dem Transmitter befinden, falls diese aus Metall sind und sich daher durch das Magnetfeld des Transmitters unerwünscht erwärmen würden.

Da die Leistungsspulen und die Kommunikationsspulen herkömmlich nur alternierend betrieben werden können, können keine Impedanzmessungen mit der Leistungsspule des Transmitters während den Kommunikationszeiten durchgeführt werden. Ursache dieser Einschränkung ist, dass die Leistungsspulen aus der Netzspannung versorgt werden und insbesondere beim Einschalten eines Umrichters/Wechselrichters im Transmitter üblicherweise die Scheitelspannung der Netzspannung am Umrichter/Wechselrichter anliegt, was zu relativ großen Strömen beim Betrieb des Umrichters führt, die die Kommunikation stören würden.

Erfindungsgemäß wird der Transmitter während des Datenaustausches anstatt an die Netzspannung an eine Speisespannung von kleiner 60 V, insbesondere kleiner 24 V, 16 V oder 12 V, geschaltet, so dass der Strom durch die Leistungsspule des Transmitters während einer Impedanzmessung zur Ermittlung der Übertragungsfunktion oder zumindest eines oder mehrerer Arbeitspunkte auf der Übertragungsfunktion klein genug bleibt, um die Kommunikation und deren Versorgung bzw. die Empfängerschaltung nicht zu stören, so dass ein gleichzeitiger Messbetrieb mit den Leistungsspulen während des Kommunikationsbetriebs möglich wird. Anstatt oder ergänzend zur Impedanzmessung kann auch eine Eigenresonanzmessung während der Kommunikation durchgeführt werden, die zur Ermittlung der Kopplung zwischen Receiver und Transmitter und/oder als ForeignObjectDetection eingesetzt werden kann.

Zusammengefasst kann eine Impedanzmessung der Leistungsspule des Transmitters mit limitierter Spannungshöhe zur Messung von betriebsrelevanten Parametern gleichzeitig mit der Kommunikation und/oder Energieübertragung über die Kommunikationsspulen erfolgen.

Die Erfindung wird nachfolgend unter Bezugnahme auf die Zeichnungen detailliert beschrieben. Hierbei zeigt:
- Fig. 1: ein System mit einer Vorrichtung zum drahtlosen Übertragen von Energie in Richtung eines elektrischen Verbrauchers mittels induktiver Kopplung und dem elektrischen Verbraucher, und
- Fig. 2: eine in eine Leistungsspule der in Fig. 1 gezeigten Vorrichtung eingespeiste elektrische Wirkleistung in Abhängigkeit von einer Frequenz eines Ansteuersignals der Leistungsspule für verschiedene Kopplungsfaktoren, die eine magnetische Kopplung zwischen der Leistungsspule der Vorrichtung und einer korrespondierenden Leistungsspule des elektrischen Verbrauchers abbilden.

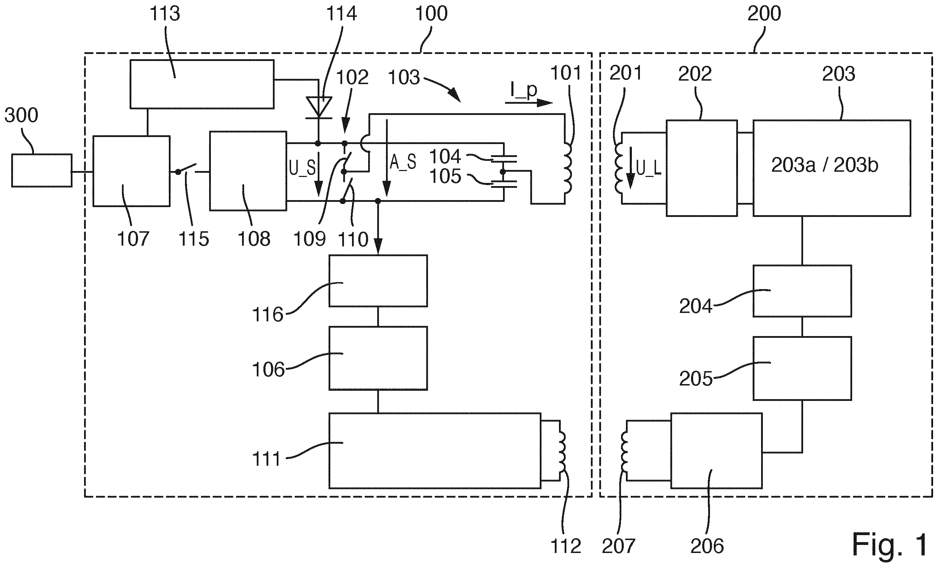

Fig. 1 zeigt ein System mit einer Vorrichtung 100 zum drahtlosen Übertragen von Energie in Richtung eines elektrischen Verbrauchers 200 mittels induktiver Kopplung und einem elektrischen Verbraucher 200.

Die Vorrichtung 100 kann auch als Transmitter bezeichnet werden. Der elektrische Verbraucher kann auch als Receiver bezeichnet werden.

Die Vorrichtung 100 ist aus einem Wechselstromnetz 300 gespeist.

Die Vorrichtung 100 weist ein Netzfilter 107 und einen nachgeschalteten Gleichrichter 108 zur Erzeugung einer Speisegleichspannung U_S mit einem zweiten Pegel auf. Zwischen Netzfilter 107 und Gleichrichter 108 ist ein Schalter 115 eingeschleift, dessen Funktion nachfolgend beschrieben wird.

Die Vorrichtung 100 weist weiter ein Kleinspannungsnetzteil 113 auf, das über eine Entkopplungsdiode 114 mit dem Ausgang des Gleichrichters 108 verbunden ist. Das Kleinspannungsnetzteil 113 dient zur Erzeugung der Speisegleichspannung U_S mit einem ersten Pegel, der kleiner als der zweite Pegel ist, der mittels des Gleichrichters 108 erzeugt wird. Solange die Speisegleichspannung U_S mit dem ersten Pegel erzeugt wird, ist der Schalter geöffnet, sonst geschlossen.

Die Vorrichtung 100 weist weiter einen Wechselrichter 102 auf, der aus der Speisegleichspannung U_S versorgt ist.

Die Vorrichtung 100 weist weiter Kondensatoren 104, 105 auf, die in Serie zwischen Ausgangsanschlüsse des Gleichrichters 108 bzw. die Speisespannung U_S eingeschleift sind.

Die Vorrichtung 100 weist weiter eine Leistungsspule 101 auf, wobei die Kondensatoren 104, 105 und die Leistungsspule 101 derart verschaltet sind, dass sie einen Schwingkreis 103 bilden. Hierzu ist ein Anschluss der Leistungsspule 101 mit einem Verbindungsknoten von Halbleiterschaltmitteln 109, 110 des Wechselrichters 102 elektrisch verbunden und ein anderer Anschluss der Leistungsspule 101 ist mit einem Verbindungsknoten der Kondensatoren 104, 105 elektrisch verbunden.

Es versteht sich, dass die dargestellte Wechselrichter- und Schwingkreistopologie lediglich exemplarisch ist. Es kann im Rahmen der vorliegenden Erfindung beispielsweise ein Wechselrichter mit einer Vollbrücke verwendet werden, es können anders verschaltete Serien- oder Parallelschwingkreise verwendet werden, usw.

Der Wechselrichter 102 ist dazu ausgebildet, aus der Speisegleichspannung U_S ein pulsweitenmoduliertes Ansteuersignal A_S in Form einer Ansteuerspannung für den Schwingkreis 103 zu erzeugen.

Die Vorrichtung 100 weist weiter eine Steuereinheit bzw. einen Regler 106 auf, die/der dazu ausgebildet ist, den Betrieb der Vorrichtung 100 zu steuern.

Die Vorrichtung 100 weist weiter Messmittel 116 auf, die dazu ausgebildet sind, alle für den Betrieb der Vorrichtung 100 notwendigen Größen zu messen, insbesondere einen Strom I_P durch die Leistungsspule 101 zu messen und eine Spannung über der Spule 101 zu messen, so dass die Steuereinheit 106 eine in die Leistungsspule 101 eingespeiste elektrische Wirkleistung und einen Effektivwert eines in die Leistungsspule 101 eingespeisten Wechselstroms ermitteln kann.

Die Vorrichtung 100 weist weiter eine Kommunikationseinrichtung 111 auf, die mit einer Kommunikationsspule 112 gekoppelt ist. Die Kommunikationseinrichtung 111 in Verbindung mit der Kommunikationsspule 112 dient zum bidirektionalen Datenaustausch mit dem elektrischen Verbraucher 200.

Der elektrische Verbraucher 200 weist eine Leistungsspule 201 und einen nachgeschalteten passiven LC-Resonanzkreis 202 auf.

Der elektrische Verbraucher 200 weist weiter eine aus dem LC-Resonanzkreis 202 gespeiste elektrische Last 203 auf, beispielsweise in Form eines ohmschen Verbrauchers 203a oder eines Elektromotors 203b, beispielsweise in Form eines Einphasen-Reihenschlussmotors.

Der elektrische Verbraucher 200 weist weiter eine Messeinrichtung 204 auf, die dazu ausgebildet ist, alle für den Betrieb des elektrischen Verbrauchers 200 relevanten Größen zu messen, beispielsweise eine an der Last 203 anstehende Spannung und einen in die Last 203 fließenden Strom.

Der elektrische Verbraucher 200 weist weiter eine Steuereinheit bzw. einen Regler 205 auf, die/der dazu ausgebildet ist, den Betrieb des elektrischen Verbrauchers 200 zu steuern.

Der elektrische Verbraucher 200 weist weiter eine Kommunikationseinrichtung 206 auf, die mit einer Kommunikationsspule 207 gekoppelt ist. Die Kommunikationseinrichtung 206 in Verbindung mit der Kommunikationsspule 207 dient zum bidirektionalen Datenaustausch mit der Vorrichtung 100.

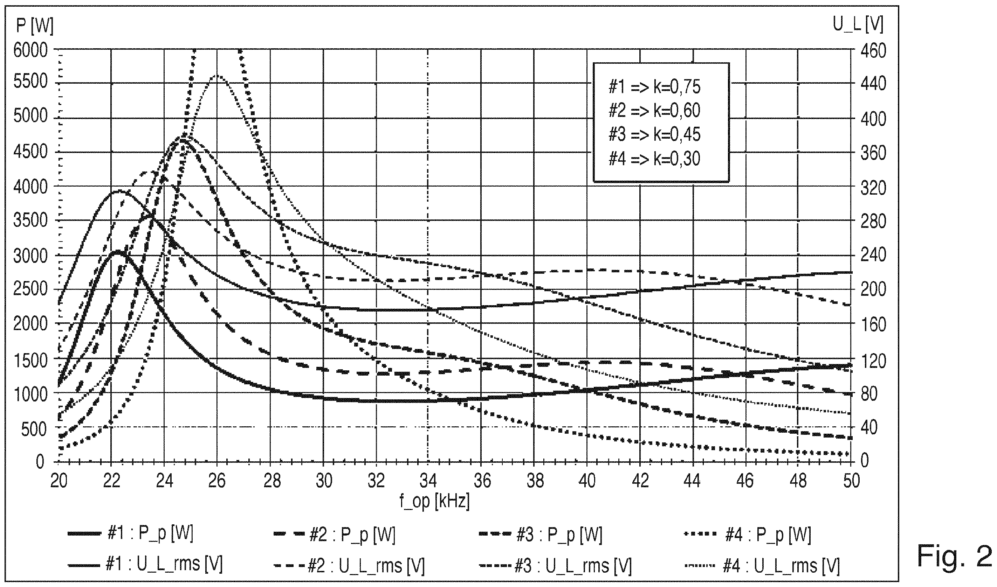

Fig. 2 zeigt den Einfluss der magnetischen Kopplung auf eine Übertragungsfunktion P(f) eines elektrischen Verbrauchers 200 mit einer Nennleistung von 2,2 kW. Die Übertragungsfunktion P(f) zeigt hierbei eine in die Leistungsspule 101 der in Fig. 1 gezeigten Vorrichtung 100 eingespeiste elektrische Wirkleistung in Abhängigkeit von einer Frequenz f des Ansteuersignals A_S. Die Übertragungsfunktion P(f) ist für verschiedene Kopplungsfaktoren k als Scharparameter dargestellt. Der Kopplungsfaktor k quantifiziert eine magnetische Kopplung zwischen den Leistungsspulen 101 und 201.

Fig. 2 zeigt weiter neben der Übertragungsfunktion P(f) auch die Spannung U_L (bzw. deren Effektivwert) an der Leistungsspule 201 des elektrischen Verbrauchers 200. Das Maximum der Spannung U_L tritt bei ohmscher Last bei Frequenzen des linken Maximums der Leistung auf.

Bei einem elektrischen Verbraucher 200, der für große Leistungen ausgelegt ist, kann eine Übertragungsfunktion P(f) mit 2 lokalen Maxima auftreten, sofern die magnetische Kopplung k zwischen Leistungsspule 101 und Empfängerspule 201 ausreichend hoch ist. Gemäß den Auslegungsregeln bei Ki ist das linke Maximum bei der kleineren Frequenz größer als das Maximum bei der höheren Frequenz, weshalb dieser Arbeitsbereich zum Übertragen großer Leistungen verwendet werden muss. Der gezeigte Verbraucher 200 weist bei Kopplungen von 0,75 und 0,6 zwei Peaks auf, bei einer Kopplung von 0,3 aber nur einen Peak. Bei der Kopplung von 0,45 besitzt die Übertragungsfunktion zwar Wendepunkte, aber kein zweites lokales Maximum.

Der Betrieb des Systems wird nachfolgend beschrieben.

Erfindungsgemäß wird während eines Datenaustausches über die Kommunikationsspulen 112, 207 die Leistungsspule 101 derart angesteuert, dass trotz des mittels der Leistungsspule 101 erzeugten magnetischen Wechselfelds ein Datenaustausch bzw. eine Datenübertragung über die Kommunikationsspulen 112, 207 möglich ist. Hierzu wird während des Datenaustausches der Wechselrichter 102 aus der Gleichspannung U_S mit dem ersten Pegel gespeist. Außerhalb des Datenaustausches wird der Wechselrichter 102 aus der Gleichspannung U_S mit dem zweiten Pegel gespeist. Der erste Pegel ist kleiner als 60 V, insbesondere kleiner als 20 V. Der zweite Pegel entspricht dem Pegel einer gleichgerichteten Netzwechselspannung.

Der Datenaustausch wird typisch zyklisch bzw. periodisch durchgeführt.

Erfindungsgemäß wird während des Datenaustausches ein Wert der Impedanz des die Leistungsspule 101 aufweisenden Schwingkreises 103 ermittelt und/oder ein Wert der Impedanz der Leistungsspule 101 ermittelt, und/oder während des Datenaustausches wird ein Wert einer Leistung ermittelt, die in den die Leistungsspule 101 aufweisenden Schwingkreis 103 eingespeist wird.

Der Wert des elektrischen Parameters wird für eine Vielzahl von unterschiedlichen Frequenzen ermittelt, um einen Frequenzgang des Parameterwerts zu bestimmen, wie dieser beispielsweise exemplarisch in Fig. 2 dargestellt ist.

Basierend auf dem Frequenzgang kann beispielsweise eine Arbeitsfrequenz eines Ansteuersignals ermittelt werden, mit dem die Leistungsspule 101 der Vorrichtung 100, insbesondere außerhalb des Datenaustausches, beaufschlagt wird.

Basierend auf dem Frequenzgang kann weiter beispielsweise eine maximal übertragbare Leistung ermittelt werden, wobei die ermittelte maximal übertragbare Leistung mittels der Kommunikationsspule 112 an den elektrischen Verbraucher 200 kommuniziert wird.

Weiter kann eine Differenz zwischen zwei bei unterschiedlichen Frequenzen ermittelten Parameterwerten gebildet werden, wobei die gebildete Differenz mittels der Kommunikationsspule 112 an den elektrischen Verbraucher 200 kommuniziert wird.

Basierend auf dem Frequenzgang können beispielsweise unerwünschte metallische Fremdkörper detektiert werden.

Während des Datenaustausches kann eine Eigenresonanzfrequenz des die Leistungsspule 101 aufweisenden Schwingkreises 103 ermittelt wird, wobei basierend auf der ermittelten Eigenresonanzfrequenz ebenfalls unerwünschte metallische Fremdkörper detektiert werden.

Detektierte metallische Fremdkörper können mittels der Kommunikationsspule 112 an den elektrischen Verbraucher 200 kommuniziert werden.

## Patentansprüche

1. Vorrichtung (100) zum drahtlosen Übertragen von Energie in Richtung eines elektrischen Verbrauchers (200) mittels induktiver Kopplung aufweisend:
- einen Wechselrichter (102), der aus einer Speisespannung (U_S) versorgt ist,
- mindestens einen Kondensator (104, 105),
- eine Leistungsspule (101),
- wobei der mindestens eine Kondensator (104, 105) und die Leistungsspule (101) derart verschaltet sind, dass sie einen Schwingkreis (103) bilden, und
- wobei der Wechselrichter (102) dazu ausgebildet ist, aus der Speisespannung (U_S) ein Ansteuersignal (A_S) für die Leistungsspule (101) zu erzeugen, und
- eine von der Leistungsspule (101) getrennt ausgebildete Kommunikationsspule (112), die dazu ausgebildet ist, Daten bidirektional mit dem elektrischen Verbraucher (200) auszutauschen,
**dadurch gekennzeichnet, dass** die Vorrichtung (100) weiter aufweist:
- ein Kleinspannungsnetzteil (113), wobei das Kleinspannungsnetzteil (113) zur Erzeugung der Speisespannung (U_S) mit einem ersten Pegel dient,
- einen Gleichrichter (108) zur Erzeugung der Speisespannung (U_S) mit einem zweiten Pegel, wobei das Kleinspannungsnetzteil (113) über eine Entkopplungsdiode (114) mit einem Ausgang des Gleichrichters (108) verbunden ist und wobei der erste Pegel kleiner als der zweite Pegel ist, und
- eine Steuereinheit (106), die dazu ausgebildet ist, den Wechselrichter (102) derart anzusteuern, dass
- der Wechselrichter (102) während des Datenaustausches über die Kommunikationsspule (112) aus der Speisespannung (U_S) mit dem ersten Pegel gespeist wird, und
- der Wechselrichter (102) außerhalb des Datenaustausches über die Kommunikationsspule (112) aus der Speisespannung (U_S) mit dem zweiten Pegel gespeist wird.

2. Verfahren zum Betreiben der Vorrichtung (100) zum drahtlosen Übertragen von Energie in Richtung des elektrischen Verbrauchers (200) mittels induktiver Kopplung nach Anspruch 1, **dadurch gekennzeichnet, dass**
- während des Datenaustausches über die Kommunikationsspule (112) die Leistungsspule (101) derart angesteuert wird, dass ein Betrag einer aufgrund des magnetischen Wechselfelds in der Kommunikationsspule (112) induzierten Spannung kleiner als ein vorgegebener Schwellenwert bleibt.

3. Verfahren nach Anspruch 2, **dadurch gekennzeichnet, dass**
- der erste Pegel kleiner als 60 V ist.

4. Verfahren nach Anspruch 3, **dadurch gekennzeichnet, dass**
- der erste Pegel zur Versorgung von IGBT-Treibern des Wechselrichters und/oder zur Ansteuerung eines Lüfters der Vorrichtung (100) geeignet ist.

5. Verfahren nach einem der Ansprüche 2 bis 4, **dadurch gekennzeichnet, dass**
- der zweite Pegel einer gleichgerichteten Netzwechselspannung entspricht.

6. Verfahren nach einem der Ansprüche 2 bis 5, **dadurch gekennzeichnet, dass**
- der Datenaustausch zyklisch durchgeführt wird.

7. Verfahren nach einem der Ansprüche 2 bis 6, **dadurch gekennzeichnet, dass**
- während des Datenaustausches ein Wert eines elektrischen Parameters eines die Leistungsspule (101) aufweisenden Schwingkreises (103) ermittelt wird.

8. Verfahren nach Anspruch 7, **dadurch gekennzeichnet, dass**
- während des Datenaustausches ein Wert der Impedanz der Leistungsspule (101) ermittelt wird und/oder ein Wert der Impedanz des die Leistungsspule (101) aufweisenden Schwingkreises (103) ermittelt wird, und/oder
- während des Datenaustausches ein Wert einer Leistung ermittelt wird, die in die Leistungsspule und/oder in den die Leistungsspule (101) aufweisenden Schwingkreis (103) eingespeist wird.

9. Verfahren nach Anspruch 7 oder 8, **dadurch gekennzeichnet, dass**
- der Wert des elektrischen Parameters für eine Vielzahl von unterschiedlichen Frequenzen ermittelt wird, um einen Frequenzgang des Parameterwerts zu bestimmen.

10. Verfahren nach Anspruch 9, **dadurch gekennzeichnet, dass**
- basierend auf den für die Vielzahl von unterschiedlichen Frequenzen ermittelten Parameterwerten eine Arbeitsfrequenz ermittelt wird, mit der die Leistungsspule (101) angesteuert wird.

11. Verfahren nach Anspruch 9 oder 10, **dadurch gekennzeichnet, dass**
- basierend auf den für die Vielzahl von unterschiedlichen Frequenzen ermittelten Parameterwerten eine maximal übertragbare Leistung ermittelt wird, wobei die ermittelte maximal übertragbare Leistung mittels der Kommunikationsspule (112) an den elektrischen Verbraucher (200) kommuniziert wird.

12. Verfahren nach einem der Ansprüche 9 bis 11, **dadurch gekennzeichnet, dass**
- eine Differenz zwischen zwei bei unterschiedlichen Frequenzen ermittelten Parameterwerten gebildet wird, wobei die gebildete Differenz mittels der Kommunikationsspule (112) an den elektrischen Verbraucher (200) kommuniziert wird.

13. System, aufweisend:
- eine Vorrichtung (100) zum drahtlosen Übertragen von Energie in Richtung eines elektrischen Verbrauchers (200) mittels induktiver Kopplung nach Anspruch 1, und
- einen elektrischen Verbraucher (200).

## Claims

1. Apparatus (100) for wirelessly transferring energy in the direction of an electrical consumer (200) by means of inductive coupling, comprising:
- an inverter (102) fed from a supply voltage (U_S),
- at least one capacitor (104, 105),
- a power coil (101),
- wherein the at least one capacitor (104, 105) and the power coil (101) are interconnected in such a way that they form a resonant circuit (103), and
- wherein the inverter (102) is configured to generate a drive signal (A_S) for the power coil (101) from the supply voltage (U_S), and
- a communication coil (112) which is separate from the power coil (101) and which is configured to exchange data bidirectionally with the electrical consumer (200), **characterized in that** the apparatus (100) further comprises:
- a low-voltage power supply unit (113), wherein the low-voltage power supply unit (113) is used to generate the supply voltage (U_S) at a first level,
- a rectifier (108) for generating the supply voltage (U_S) at a second level, wherein the low-voltage power supply unit (113) is connected via a decoupling diode (114) to an output of the rectifier (108) and wherein the first level is lower than the second level, and
- a control unit (106) which is configured to drive the inverter (102) in such a way that
- the inverter (102) is supplied with the first level from the supply voltage (U_S) during the data exchange via the communication coil (112), and
- the inverter (102) is supplied with the second level from the supply voltage (U_S) outside the data exchange via the communication coil (112).

2. Method for operating the apparatus (100) for wirelessly transferring energy in the direction of the electrical consumer (200) by means of inductive coupling according to Claim 1, **characterized in that**
- during data exchange via the communication coil (112), the power coil (101) is driven in such a way that a magnitude of a voltage induced in the communication coil (112) by the alternating magnetic field remains lower than a predetermined threshold value.

3. Method according to Claim 2, **characterized in that**
- the first level is lower than 60 V.

4. Method according to Claim 3, **characterized in that**
- the first level is suitable for supplying IGBT drivers of the inverter and/or for driving a fan of the apparatus (100).

5. Method according to any one of Claims 2 to 4, **characterized in that**
- the second level corresponds to a rectified AC mains voltage.

6. Method according to any one of Claims 2 to 5, **characterized in that**
- the data is exchanged cyclically.

7. Method according to any one of Claims 2 to 6, **characterized in that**
- during the data exchange, a value of an electrical parameter of a resonant circuit (103) comprising the power coil (101) is determined.

8. Method according to Claim 7, **characterized in that**
- during the data exchange, a value of the impedance of the power coil (101) is determined and/or a value of the impedance of the resonant circuit (103) comprising the power coil (101) is determined, and/or
- during the data exchange, a value of a power which is fed into the power coil and/or into the resonant circuit (103) comprising the power coil (101) is determined.

9. Method according to Claim 7 or 8, **characterized in that**
- the value of the electrical parameter is determined for a plurality of different frequencies in order to determine a frequency response of the parameter value.

10. Method according to Claim 9, **characterized in that**
- an operating frequency at which the power coil (101) is driven is determined based on the parameter values determined for the plurality of different frequencies.

11. Method according to Claim 9 or 10, **characterized in that**
- a maximum transferable power is determined based on the parameter values determined for the plurality of different frequencies, wherein the determined maximum transferable power is communicated to the electrical consumer (200) by means of the communication coil (112).

12. Method according to any one of Claims 9 to 11, **characterized in that**
- a difference is formed between two parameter values determined at different frequencies, wherein the difference formed is communicated to the electrical consumer (200) by means of the communication coil (112).

13. System, comprising:
- an apparatus (100) for wirelessly transferring energy in the direction of an electrical consumer (200) by means of inductive coupling according to Claim 1, and
- an electrical consumer (200).

## Revendications

1. Dispositif (100) destiné à la transmission sans fil d'énergie en direction d'un consommateur électrique (200) au moyen d'un couplage inductif, comportant :
- un onduleur (102) alimenté à partir d'une tension d'alimentation (U_S),
- au moins un condensateur (104, 105),
- une bobine de puissance (101),
- ledit au moins un condensateur (104, 105) et la bobine de puissance (101) étant connectés de manière à former un circuit oscillant (103), et
- l'onduleur (102) étant conçu pour générer un signal d'attaque (A_S) destiné à la bobine de puissance (101) à partir de la tension d'alimentation (U_S), et
- une bobine de communication (112) réalisée séparément de la bobine de puissance (101) et conçue pour échanger des données de manière bidirectionnelle avec le consommateur électrique (200),
**caractérisé en ce que** le dispositif (100) comporte en outre :
- une alimentation basse tension (113), l'alimentation basse tension (113) servant à générer la tension d'alimentation (U_S) à un premier niveau,
- un redresseur (108) destiné à générer la tension d'alimentation (U_S) à un deuxième niveau, l'alimentation basse tension (113) étant connectée à une sortie du redresseur (108) par l'intermédiaire d'une diode de découplage (114) et le premier niveau étant inférieur au deuxième niveau, et
- une unité de commande (106) qui est conçue pour attaquer l'onduleur (102) de telle sorte que
- l'onduleur (102) soit alimenté à partir de la tension d'alimentation (U_S) au premier niveau pendant l'échange de données par l'intermédiaire de la bobine de communication (112), et
- l'onduleur (102) est alimenté en dehors de l'échange de données par l'intermédiaire de la bobine de communication (112) à partir de la tension d'alimentation (U_S) au deuxième niveau.

2. Procédé de fonctionnement du dispositif (100) destiné à la transmission sans fil d'énergie en direction du consommateur électrique (200) au moyen d'un couplage inductif selon la revendication 1, **caractérisé en ce que**
- la bobine de puissance (101) est attaquée pendant l'échange de données par l'intermédiaire de la bobine de communication (112) de manière à ce qu'une valeur d'une tension induite dans la bobine de communication (112) du fait du champ magnétique alternatif reste inférieure à une valeur de seuil prédéfinie.

3. Procédé selon la revendication 2, **caractérisé en ce que**
- le premier niveau est inférieur à 60 V.

4. Procédé selon la revendication 3, **caractérisé en ce que**
- le premier niveau est adapté à l'alimentation de circuits d'attaque IGBT de l'onduleur et/ou à l'attaque d'un ventilateur du dispositif (100).

5. Procédé selon l'une des revendications 2 à 4, **caractérisé en ce que**
- le deuxième niveau correspond à une tension alternative redressée.

6. Procédé selon l'une des revendications 2 à 5, **caractérisé en ce que**
- l'échange de données est effectué de manière cyclique.

7. Procédé selon l'une des revendications 2 à 6, **caractérisé en ce que**
- une valeur d'un paramètre électrique d'un circuit oscillant (103) comportant la bobine de puissance (101) est déterminée pendant l'échange de données.

8. Procédé selon la revendication 7, **caractérisé en ce que**
- une valeur de l'impédance de la bobine de puissance (101) est déterminée et/ou une valeur de l'impédance du circuit oscillant (103) comportant la bobine de puissance (101) est déterminée pendant l'échange de données, et/ou
- une valeur d'une puissance injectée dans la bobine de puissance et/ou dans le circuit oscillant (103) comportant la bobine de puissance (101) est déterminée pendant l'échange de données.

9. Procédé selon la revendication 7 ou 8, **caractérisé en ce que**
- la valeur du paramètre électrique est déterminée pour une pluralité de fréquences différentes, afin de déterminer une réponse en fréquence de la valeur du paramètre.

10. Procédé selon la revendication 9, **caractérisé en ce que**
- une fréquence de travail avec laquelle la bobine de puissance (101) est attaquée est déterminée sur la base des valeurs de paramètres déterminées pour la pluralité de fréquences différentes.

11. Procédé selon la revendication 9 ou 10, **caractérisé en ce que**
- une puissance maximale transmissible est déterminée sur la base des valeurs de paramètres déterminées pour la pluralité de fréquences différentes, la puissance maximale transmissible déterminée étant communiquée au consommateur électrique (200) au moyen de la bobine de communication (112).

12. Procédé selon l'une des revendications 9 à 11, **caractérisé en ce que**
- une différence entre deux valeurs de paramètres déterminées à des fréquences différentes est calculée, la différence calculée étant communiquée au consommateur électrique (200) au moyen de la bobine de communication (112).

13. Système, comportant :
- un dispositif (100) destiné à la transmission sans fil d'énergie en direction d'un consommateur électrique (200) au moyen d'un couplage inductif selon la revendication 1, et
- un consommateur électrique (200).
